# EUROPÄISCHE PATENTANMELDUNG

(11) **EP 0 948 162 A2**
(43) Veröffentlichungstag der Anmeldung: **06.10.1999**
(21) Anmeldenummer: 99440050.5
(22) Anmeldetag: 12.03.1999
(51) Int. Cl.: H04L 12/24, H04M 15/00

(54) **Verfahren zur Vergebührung von Diensten, Netzknoten und Netzübergangsknoten**

(30) Priorität: 28.03.1998 DE 19813906
(71) Anmelder: ALCATEL, 75008 Paris (FR)
(72) Erfinder: Rosenberg, Marc, 70771 Leinfelden-Echterdingen (DE)
(74) Vertreter: Zinsinger, Norbert

(57) **Zusammenfassung**

Die Erfindung betrifft ein Verfahren zur Vergebührung von Diensten in einem aus zwei oder mehr Kommunikationsnetzen (KN1, KN2, KN3) verschiedener Netzbetreiber bestehenden Kommunikationssystem, sowie Netzknoten (N3 bis N5) und Netzübergangsknoten (GN1 bis GN4) für ein solches Kommunikationssystem. Für eine Verbindung, deren Aufbau von einem Teilnehmer (A) eines ersten Kommunikationsnetzes (KN1) des Kommunikationssystems veranlaßt ist, werden ein oder mehrere Dienste von Netzknoten (N3 bis N5) eines zweiten Kommunikationsnetzes (KN2; KN3) des Kommunikationssystems erbracht. Die Netzknoten (N3 bis N5) des zweiten Kommunikationsnetzes (KN2), die Dienste für die Verbindung erbringen, ermitteln jeweils eine dem erbrachten Dienst zugeordnetes Entgelt (Waaa bis Wccc). Entgelte (Waaa bis Wccc) werden zur Vergebührung im ersten Kommunikationsnetz (KN1) von Netzknoten (N3 bis N5) des zweiten Kommunikationsnetzes an einen ersten Netzübergangsknoten (GN2) des zweiten Kommunikationsnetzes signalisiert, der der Verbindung in Richtung des ersten Kommunikationsnetzes (KN1) zugeordnet ist. Der erste Netzübergangsknoten (GN2) führt eine weitere Entgelt-Signalisierung (Weee) der an ihn signalisierten Entgelte in Richtung des erste Kommunikationsnetzes (KN1) durch.

## Beschreibung

Die Erfindung betrifft ein Verfahren zur Vergebührung von Diensten nach dem Oberbegriff von Anspruch 1, einen Netzknoten nach dem Oberbegriff von Anspruch 12, einen Netzübergangsknoten nach dem Oberbegriff von Anspruch 13, und einen Netzübergangsknoten nach dem Oberbegriff von Anspruch 14.

Die Erfindung geht von einer heute üblichen Vergebührung von Übertragungsdiensten in Fernsprechnetzen aus, wie sie beispielsweise im "Lehrbuch der Fernmeldetechnik", Band 1, fünfte Auflage 1986, Fachverlag Schiele & Schön GmbH, Berlin, Seiten 614 bis 620 beschrieben ist.

Die Vergebührung einer Fernsprechverbindung wird von der Teilnehmeranschlußvermittlungsstelle desjenigen Teilnehmers gesteuert, der die Verbindung veranlaßt hat. Anhand der gerufenen Rufnummer und der Tages- und Wochenzeit wird ein der Verbindung zuzuordnender Tarif ermittelt. Ein diesem Tarif entsprechende Zählimpulsrate wird bestimmt und es werden gemäß der Zählimpulsrate Zählimpulse von der Teilnehmeranschlußvermittlungsstelle über die Teilnehmeranschlußleitung an das Endgerät des Teilnehmers gesendet. Anhand der empfangenen Zählimpulse berechnet das Endgerät des Teilnehmers sodann die für die Verbindung aktuell angefallenen Gebühren. Weiter wird von der Teilnehmervermittlungsstelle aus dem ermittelten Tarif und der Zeitdauer, während der die Verbindung bestanden hat, die Gebühr für die Verbindung berechnet.

Wenn ein Teil der Verbindung durch ein Fernsprechnetz eines anderen Netzbetreibers aufgebaut worden ist, wie dies beispielsweise im Fall einer internationalen Verbindung der Fall ist, so ist vom Netzbetreiber, der die Gebühr für die Verbindung vom Teilnehmer erhebt, für die Inanspruchnahme dieses Verbindungsabschnittes eine Gebühr an den anderen Netzbetreiber zu zahlen. Die Vergebührung zwischen den Netzbetreibern erfolgt bei der Gebührennachbearbeitung, d. h. die angefallenen Gebührendaten werden beispielsweise am Ende eines Monats gesammelt und mittels eines Rechners ausgewertet.

Der Nachteil dieses bestehenden Vergebührungsverfahrens besteht darin, daß damit flexiblere Tarifmodelle nur schwer realisierbar sind und in Fernsprechnetzen anderer Netzbetreiber erbrachte Telekommunikationsdienstleistungen, die über einen reinen Übedragungsdienst hinausgehen, nicht gemeinsam mit dem Übertragungsdienst abrechenbar sind.

Der Erfindung liegt nun die Aufgabe zugrunde, eine flexiblere Vergebührung von Verbindungen oder Verbindungskonfigurationen zu ermöglichen, die zwischen Endstellen verschiedener Kommunikationsnetze bestehen.

Diese Aufgabe wird gelöst durch ein Verfahren zur Vergebührung von Diensten nach der Lehre von Anspruch 1, einen Netzknoten nach der Lehre von Anspruch 12, einen Netzübergangsknoten nach der Lehre von Anspruch 13, und einen Netzübergangsknoten nach der Lehre von Anspruch 14.

Der Erfindung liegt hierbei der Gedanke zugrunde, daß die Entgelte für in einem Kommunikationsnetz eines anderen Netzbetreibers erbrachten Dienste von Knoten diese Kommunikationsnetzes an einen Netzübergangsknoten dieses Kommunikationsnetzes signalisiert werden, der dann seinerseits eine weitere Entgelt-Signalisierung ins Kommunikationsnetz desjenigen Teilnehmers durchführt, der die Verbindung veranlaßt hat.

Unter Dienste sind hierbei sowohl Übertragungsdienste, als auch sonstige Telekommunikationsdienstleistungen, wie die Bereitstellung von Informationen oder Auftragsdienste zu verstehen.

Der Vorteil der Erfindung besteht darin, daß die Vergebührung von sämtlichen in Kommunikationsnetzen anderer Netzbetreiber erbrachten Dienste über das Zugangsnetz des die Verbindung veranlassenden Teilnehmers ermöglicht wird. Die Gebührendaten stehen aktuell im Zugangsnetz des Teilnehmers zur Verfügung. Dies ermöglicht eine äußerst flexible Anzeige und Abrechnung von Gebühren. Der Teilnehmer erhält für die Nutzung von Telekommunikationsnetzen nur eine Rechnung, die des Zugangsnetzbetreibers.

Vorteilhafte Ausgestaltungen der Erfindung sind den Unteransprüchen zu entnehmen.

Es ist hierbei vor allem vorteilhaft, daß Netzübergangsknoten zu dritten Kommunikationsnetzen, in denen ebenfalls Dienste für die Verbindung erbracht werden, die in dem dritten und in weiteren, nachfolgenden Kommunikationsnetzen angefallenen Gebühren für die Verbindung an den Netzübergangsknoten des zweiten Kommunikationsnetzes signalisieren, der die weitere Signalisierung ins erste Kommunikationsnetz vornimmt. Die erfindungsgemäße Lösung stellt damit eine globale, iterative Lösung dar, in der die Anzahl und die Anordnung der Kommunikationsnetze, in denen Dienste für eine Verbindung erbracht werden, keine Rolle spielt.

Weiter ist es vorteilhaft, neben "Wirkgebühren", die vom Zugangsnetzbetreiber vergebührt werden, auch "Blindgebühren" zu signalisieren, die über eine sonstige Vertragsbeziehung entrichtet werden. Dadurch wird es möglich, dem Teilnehmer eine für alle auftretenden Fälle korrekte Gebührenanzeige bereitzustellen. Weiter wird dadurch eine weitere Flexibilisierung der Tarifstruktur möglich, beispielsweise durch Beachtung solcher andersweitig beglichenen Gebühren bei der Vergabe von Rabatten.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit mehreren erfindungsgemäßen Netzknoten und mehreren erfindungsgemäßen Netzübergangsknoten.
- Fig. 2a: zeigt ein Blockschaltbild eines erfindungsgemäßen Netzknotens des Kommunikationssystems nach Fig. 1.
- Fig. 2b: zeigt Blockschaltbilder zweier erfindungsgemäßer Netzübergangsknoten des Kommunikationssystems nach Fig. 1.
- Fig. 3: zeigt eine funktionelle Darstellung eines Ausschnittes des Kommunikationssystems nach Fig. 1 für ein erstes Ausführungsbeispiel.
- Fig. 4: zeigt eine funktionelle Darstellung eines Ausschnittes des Kommunikationssystems nach Fig. 1 für eih zweites Ausführungsbeispiel.
- Fig. 5: zeigt eine funktionelle Darstellung eines Ausschnittes des Kommunikationssystems nach Fig. 1 für ein drittes Ausführungsbeispiel.
- Fig. 6: zeigt eine funktionelle Darstellung eines Ausschnittes des Kommunikationssystems nach Fig. 1 für ein viertes Ausführungsbeispiel.

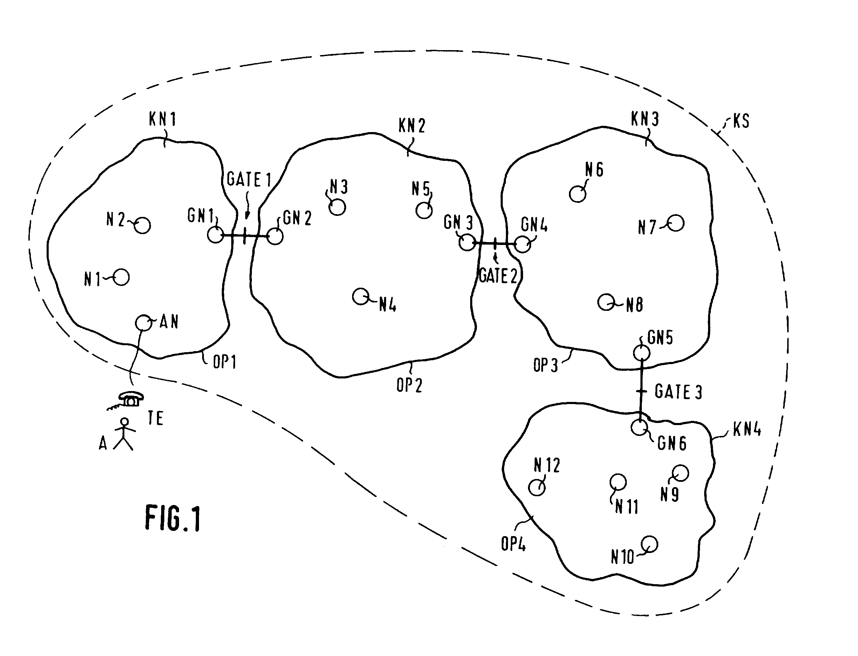

Fig. 1 zeigt ein Kommunikationssystem KS, ein Endgerät TE und ein diesem zugeordneten Teilnehmer A. Das Kommunikationssystem KS weist weiter mehrere Kommunikationsnetze KN1 bis KN4 auf, die miteinander verbunden sind und jeweils unterschiedlichen Netzbetreibern OP1, OP2, OP3 bzw. OP4 zugeordnet sind.

Die Kommunikationsnetze KN1 bis KN4 stellen jeweils ein ISDN-Fernsprechnetz (Integrated Services Digital Network) eines Netzbetreibers dar. Es ist aber auch möglich, daß die Kommunikationsnetze KN1 bis KN4 von andersartigen Kommunikationsnetzen verschiedener Netzbetreiber gebildet werden, die der Sprach, Bild und/ oder Datenkommunikation dienen. Es kann sich somit bei den Kommunikationsnetze KN1 bis KN4 auch um übliche analoge Fernsprechnetze, um Breitband-ISDN-Netze, um Mobilfunknetze, beispielsweise nach dem GSM Standard (GSM = Global System for Mobile Communication), um Datennetze, beispielsweise basierend auf dem TCP/ IP Protokoll (TCP/ IP = Transmission Control Protocol/ Internet Protocol) oder um ein Kommunikationsnetz handeln, bei dem ein Teilnehmer über verschiedenartige Anschlußtechniken (Festnetzanschluß, Mobilfunkanschluß, Cordless-Anschluß) erreichbar ist, wie dies beispielsweise bei einem PCS System (PCS = Personal Communication System) der Fall ist. Es kann sich bei den Kommunikationsnetzen KN1 bis KN4 auch um verschiedenartige Kommunikationsnetze handeln. Eine Fernsprechverbindung kann beispielsweise über ein Mobilfunknetz, ein ISDN-Netz und ein PCS-Netz geführt sein. Werden entsprechende Gateway-Funktionen bereitgestellt, kann eine solche Fernsprechverbindung weiter auch über ein Datennetz (z. B. Internet) geführt sein. Auch eine Datenverbindung kann über verschiedenartige Daten- und Fernsprechnetze geführt sein.

Das Endgerät TE ist ein ISDN-Telefon. Bei dem Endgerät TE kann es sich aber auch um einen analoges Telefon, einen Bildfernsprecher, einen Computer oder um ein Handy handeln.

Jedes der Kommunikationsnetze KN1 bis KN4 besteht aus logischer Sicht aus einem oder aus mehreren Netzknoten, von denen in Fig. 1 nur die an einer Verbindung (Verbindungskonfiguration) beteiligten Netzknoten AN, N1 bis N12 und GN1 bis GN6 gezeigt sind.

Der Netzknoten AN ist ein Zugangsknoten des Netzbetreibers OP1, bei dem der Teilnehmer A Kunde ist. Dieser Netzknoten ermöglicht dem Teilnehmer A, eine Verbindung aufzubauen und Zugang zu der so aufgebauten Verbindungskonfiguration zu erhalten. Der Netzknoten AN wird hierbei von einer ISDN-Teilnehmervermittlungsstelle gebildet, mit der das Endgerät TE über eine Teilnehmeranschlußleitung verbunden ist.

Die Netzknoten GN1 bis GN6 sind Netzübergangsknoten, die verschiedene Kommunikationsnetze miteinander verbinden. Jeweils zwei Netzknoten GN1 und GN2, GN3 und GN4, sowie GN5 und GN6, die jeweils zwei benachbarten Kommunikationsnetzen angehören, sind über Nutz- und Signalisierungskanäle miteinander verbunden und bilden zusammen einen Netzübergang GATE1, GATE2, bzw. GATE3. Bei den Netzknoten GN1 bis GN6 handelt es sich hier jeweils um eine Transit-Vermittlungsstelle, die mit Netzübergangsfunktionen (Protokollanpassung, ISUP screening, Vergebührung usw. ) ausgestattet ist. Es ist natürlich auch möglich, daß ein Gateway-Knoten beispielsweise von einem Internet- Gateway-Rechner gebildet wird, der zusätzlich Brigding-, Routing- und Netzzugangsfunktionen bereitstellt.

Die Netzknoten N1 bis N12 stellen Dienst-Knoten dar, die Dienste für die Verbindung zur Verfügung stellen. Solch ein Dienst kann ein Verbindungs-Dienst oder eine Dienstleistung sein.

Ein Verbindungs-Dienst besteht beispielsweise in der Bereitstellung einer Verbindung zum nachfolgenden Netzknoten. Ein Netzknoten, der solch einen Dienst bereitstellt, ist beispielsweise eine Vermittlungsstelle oder ein Vermittlungs- oder Protokollkonvertierungselement eines Datennetzes.

Eine Dienstleistung besteht beispielsweise
- aus der Bereitstellung von Informationen, z.B. Wetterbericht, Börsendatent,
- aus einem übergeordneten Verbindungsdienst, der über den reinen Verbindungsaufbau hinausgehen und etwa ein nachfolgendes Verbindungsziel bestimmt, z. B. PVN Dienst (PVN = Private Virtuell Network), Global Number Dienst, least cost routing Dienst, oder
- aus einem Auftragsdienst, z. B. Telebanking, Buchungsdienst (Flug, Mietwagen,..) oder Bestelldienst (Fleurop).

Ein Netzknoten, der eine Dienstleistung bereitstellt, wird hierbei von einer Dienstplattform und einem auf dieser ablaufenden Dienst-Programm gebildet. Die Dienstplattform ist hier mittels eines IN-Systems (IN =Intelligent Network) realisiert, das aus mehreren Dienstvermittlungsstellen (Servic Switching Point) und aus einem oder mehreren mit diesen kommunizierenden Dienststeuereinrichtungen (Service Control Point) besteht. Die Kommunikation erfolgt hierbei über das Nr. 7 Signalisierungssystem mittels des INAP -Protokolls (INAP = Intelligent Network Application Part) oder des CAP Protokolls (CAP = Camel Application Part, IN für Mobilfunknetze). Es ist auch möglich, daß bereits eine Vermittlungsstelle eine Dienstplattform für Dienststeuerprogramme bildet (z. B. ISDN Dienste) oder daß ein Server-Rechner (z. B. Internet-Server) eine Dienstplattform bildet.

Der Teilnehmer A veranlaßt den Aufbau einer Verbindung, indem er über das Endgerät TE eine Verbindungsanforderung zum Aufbau einer Verbindung zu einer bestimmten Zieladresse an den Zugangsknoten AN sendet. Eine solche Zieladresse ist beispielsweise die Rufnummer eines Ziel-Teilnehmers oder eines von einem der Kommunikationsnetze KN1 bis KN4 bereitgestellten Dienstes. Während des Aufbaus und des Bestehens der Verbindung werden von dem Teilnehmer in den Kommunikationsnetzen KN1 bis KN4 Verbindungs-Dienste und Dienstleistungen in Anspruch genommen, für die jeweils Entgelte, also vom Teilnehmer A zu entrichtende Dienstgebühren, anfallen.

Der Teilnehmer A nimmt beispielsweise im Kommunikationsnetz KN1 Verbindungsdienste des Netzknotens N1 und eine Dienstleistung des Netzknotens N2 in Anspruch, die in der Weitervermittlung zum Netzknoten N3 des Kommunikationsnetzes KN2 besteht. Ähnliche Dienste werden in den Kommunikationsnetzen KN2 und KN3 von den Netzknoten N3 bis N8 für die Verbindung erbracht. Im Kommunikationsnetz KN4 bildet dann der Netzknoten N12 die Endstelle der Verbindung. Der Netzknoten N12 stellt dem Teilnehmer A hierbei beispielsweise einen Auftragsdienst als Dienstleistung zur Verfügung.

Aus logischer Sicht sind drei verschiedenen Parteien an der Verbindungskonfiguration beteiligt, nämlich anfordernder Teilnehmer, Netzbetreiber und Dienstleister:
- Der Teilnehmer A nimmt als Kunde Verbindungsdienste und Dienstleistungen in Anspruch.
- Der Netzbetreiber OP1 ist als Anschlußnetzbetreiber des Teilnehmers A für den Einzug und die Verteilung aller für die Verbindungskonfiguration anfallenden Entgelte verantwortlich. Der Netzbetreiber OP1 ist auch für die Entgelt-Abrechnung mit den an sein eigenes Kommunikationsnetz KN1 angrenzenden Netzbetreibern, so auch mit dem Netzbetreiber OP2 zuständig. Der Netzbetreiber OP2 ist wiederum für die Entgelt-Abrechnung mit dem Netzbetreiber OP3 und dieser für die Entgelt-Abrechnung mit dem Netzbetreiber OP4 zuständig. Weiter leiten die jeweiligen Netzbetreiber OP1 bis OP4 an die Dienstleister ihren Anteil an dem von dem Teilnehmer A für die Verbindung entrichteten Gesamtentgelt weiter. Es ist auch möglich, daß Entgelte direkt von einem Dienstleister mit dem Teilnehmer A abgerechnet werden (direktes Vertragsverhältnis zwischen Dienstleister und Teilnehmer A). Für den Einzug und die Verteilung solcher Entgelte ist der Anschlußnetzbetreiber OP1 nicht verantwortlich.
- Die Dienstleister bieten keine Verbindungsdienste, sondern lediglich Dienstleistungen an. Sie könnten so auch als Dienst-Betreiber bezeichnet werden. Ein Netzbetreiber stellt ihnen hierfür eine Dienstplattform bereit, auf der dann das Dienststeuerprogramm des Dienstleisters abläuft und eine Dienstleistung im Kommunikationsnetz des Netzbetreibers bereitstellt. Sofern der Dienstleister keinen direkten Vertrag mit dem Teilnehmer A hat, rechnet er seine anfallenden Entgelte mit dem Netzbetreiber ab, der ihm die Dienstplattform zur Verfügung stellt.
Zur Abrechnung und zur Anzeige der für die Verbindungskonfiguration angefallenen Dienst-Gebühren werden folgende Arten von Entgelt Signalisierung genutzt:
- Zum einen die Wirk-Entgelt Signalisierung. Mit Hilfe der Wirk-Entgelt Signalisierung wird der Transfer von Gebühren-Forderungen innerhalb der Verbindungskonfiguration gesteuert. Die von einem beliebigen Netzknoten abgegebenen Wirk-Entgelt Signalisierungen entsprechen dabei einer Forderung nach Erhalt eines bestimmten Entgelts. Die von einem beliebigen Netzknoten aufgenommenen Wirk-Entgelt Signalisierungen entsprechen einer Übernahme der Entgelt-Forderungen eines oder mehrerer anderer Knoten. Ein aufnehmender Netzknoten ist für die Bezahlung der aufgenommenen Wirk-Entgelt Signalisierungen und damit der von diesen übermittelten Entgelte verantwortlich.
- Zum anderen die Blind-Entgelt Signalisierung. Fallen durch die Inanspruchnahme von Diensten Entgelte an, die direkt vom betreffenden Dienstleister mit dem Teilnehmer A abgerechnet werden, so wird hierfür keine Wirk-Entgelt Signalisierung an einen anderen Netzknoten abgegeben, da die Gebührenforderung bereits beglichen ist. Die Abrechnung mit dem Dienstleister kann hierbei beispielsweise durch Übermittlung einer Kreditkartennummer oder durch Angabe eines mit dem Dienstleister im Vorfeld vereinbarten Paßwortes erfolgen. Der Netzknoten eines Dienstleister kann darüberhinaus auch Wirk-Entgelt Signalisierung aufnehmen und diese direkt mit dem Teilnehmer abrechnen (z. B. Kreditkartendienst, der das Entgelt für die Verbindungskonfiguration oder einen Teil der Verbindungskonfiguration übernimmt).

Um bei der Anzeige der angefallenen oder anfallenden Gebühren für die Verbindung beim Teilnehmer auch diese direkt abgerechneten Entgelte berücksichtigen zu können, werden diese mittels einer Blind-Entgelt Signalisierung in Richtung des Teilnehmers signalisiert. Um Rabatte gewähren zu können, können die abgegebenen Blind-Entgelt Signalisierungen hierbei geringer als die aufgenommenen Wirk-Entgelt Signalisierungen sein.

Die einzelnen Netzknoten AN, N1 bis N12 und GN1 bis GN6 können nun Wirk-Entgelt Signalisierung abgeben (Forderung nach Entgelt) oder Wirk-Entgelt Signalisierungen aufnehmen (Übernahme von Entgelt). Es gilt dabei die Grundregel, daß die Menge der aufgenommenen Wirk-Entgelt Signalisierungen der Menge der abgegebenen Wirk-Entgelt Signalisierungen entsprechen muß. Es ist auch möglich, daß lediglich Zugangsknoten und Netzübergangsknoten Wirk-Entgelt Signalisierungen übernehmen können.

Alle Wirk-Entgelt Signalisierungen, die der Zugangsknoten AN aufnimmt, sind vom Teilnehmer A an den Netzbetreiber OP1 zu zahlen. Alle Wirk-Entgelt Signalisierungen, die von einer Dienst-Knoten aufgenommen werden, zahlt der entsprechende Dienstleister zuzüglich der für die Bereitstellung der Dienstplattform anfallenden Gebühren an seinen Netzbetreiber. Umgekehrt erhält der Dienstleister eines Dienst-Knotens alle von dem Dienst-Knoten abgegebenen Wirk-Entgelt Signalisierungen, abzüglich der für die Bereitstellung der Dienstplattform anfallenden Gebühren von seinem Netzbetreiber. Alle Wirk-Entgelt Signalisierungen, die ein Netzübergang auf der einen Seite in dem einen Kommunikationsnetz aufgenommen/ abgegeben hat, zahlt/ erhält die andere Seite und damit der Netzbetreiber des anderen Kommunikationsnetzes.

Anhand von Fig. 2a wird nun der Aufbau eines Dienst-Knotens beispielhaft anhand des Aufbaus des Netzknotens N3 erläutert.

Fig. 2a zeigt den Netzknoten N3, der eine Diensterbringungseinheit SERV und eine Vergebührungseinheit CU aufweist. Die Vergebührungseinheit CU weist fünf Steuereinheiten SIG1, CAL, DOC, CHA und REC auf. Die Steuereinheiten SIG1, CAL, CHA und REC empfangen und senden Wirk-Entgelt W und Blind-Entgelt B.

Die Diensterbringungseinheit SERV erbringt den vom Netzknoten N3 bereitgestellten Dienst. Es ist auch möglich, daß der Netzknoten N3 mehrere verschiedene Dienste bereitstellt und somit mehrere Diensterbringungseinheiten aufweist.

Die Steuereinheit CAL ermittelt das Entgelt, das für die Erbringung eines Dienstes durch die Diensterbringungseinheit SERV (oder durch die Diensterbringungseinheiten des Netzknotens N3) für eine Verbindung anfällt und der Verbindung zuzuordnen ist. Hierfür wird beispielsweise ein für die Diensterbringung festgelegter Einmal-Tarif oder eine Tarifrate berechnet und daraus das zuzuordnende Entgelt bestimmt. Das ermittelte Entgelt stellt forderungsmäßig Wirk-Entgelt W dar und wird von der Steuereinheit CAL an die Steuereinheit SIG1 oder an die Steuereinheit CHA abgegeben.

Die Steuereinheit SIG1 nimmt Wirk-Entgelt W von den Steuereinheiten CAL und REC, und Blind-Entgelt B von der Steuereinheit CHA auf. Zur Vergebührung von für die Verbindung anfallende Dienste im Kommunikationsnetz KN1 gibt sie von ihr aufgenommenes Wirk-Entgelt W an den Netzübergangsknoten GN2 ab, der den der Verbindung zugeordneten Netzübergangsknoten in Richtung des Zugangs-Kommunikationsnetzes KN1 darstellt. Auch das von ihr aufgenommene Blind-Entgelt B gibt sie an diesen Netzübergangsknoten ab. Es ist auch möglich, daß die Steuereinheit SIG1 Wirk-Entgelt an einen anderen Dienst-Knoten des Kommunikationsnetzes KN2 abgibt.

Die Steuereinheit REC nimmt Wirk-Entgelt von anderen Netzknoten des Kommunikationsnetzes KN2 auf und gibt es an die Steuereinheit SIG1 oder CHA weiter.

Es ist vorteilhaft, daß für jeden Netzknoten ein Entgelt-Aufnahme Profil festgelegt ist, das angibt, in welchem Umfang er die von anderen Netzknoten des gleichen Kommunikationsnetzes abgegebenen Wirk-Entgelt Signalisierungen übernimmt. Er kann beispielsweise Wirk-Entgelt Signalisierungen nur für die in Vorwärtsrichtung nachfolgenden Netzknoten oder nur für den in Rückwärtsrichtung vorherigen Verbindungsabschnitt übernehmen. Dieses Entgelt-Aufnahme Profil ist im jeweiligen dazugehörigen Netzknoten abgespeichert. Im Netzknoten N3 ist dieses Entgelt-Aufnahme Profil in einer von der Steuereinheit REC verwalteten Datenbank DBP gespeichert. Die Steuereinheit REC verfügt über eine Filterfunktion, die auf die Datenbank DBP zugreift und mittels des dort abgespeicherten Profils entscheidet, ob sie die Aufnahme einer Wirk-Entgelt Signalisierung akzeptiert oder verweigert. Es ist auch möglich, daß dieses Profil den anderen Netzknoten des jeweiligen Kommunikationsnetzes übermittelt wird und damit deren Abgabeverhalten beeinflußt. In diesem Fall würden diese Profile von der Steuereinheit SIG1 verwaltet.

Es ist auch möglich, die Aufnahme oder Abgabe von Blind-Entgelt Signalisierungen auf dieselbe Weise zu filtern.

Die Steuereinheit CHA stellt eine Funktion bereit, die eine direkte Vergebührung zwischen dem Teilnehmer A und einem Dritten (Kreditkarteninstitut, Dienstbetreiber) ermöglicht. Die Steuereinheit CHA nimmt von den Steuereinheiten CAL und REC Wirk-Entgelt W auf, das sie mit diesem Dritten abrechnet und gibt, wie bereits oben erläutert, ein entsprechendes Blind-Entgelt B an die Steuereinheit SIG1 ab.

Es ist vorteilhaft, die Aufnahme und die Abgabe von Wirk-Entgelt Signalisierungen in jedem der Netzknoten AN, N1 bis N12 und GN1 bis GN6 zu dokumentieren und damit nachvollziehbar und nachweisbar zu machen. Dieses Funktion wird von der Steuereinheit DOC erbracht Sie besitzt hierfür eine Datenbank DBDOC, in der festgehalten ist, ob und an wen der Netzknoten N3 Wirk-Entgelt Signalisierungen abgegeben hat und von welchen Netzknoten er Wirk-Entgelt Signalisierungen aufgenommen hat.

Die Datenbank kann hierbei wie folgt strukturiert sein: Für jeden Netzknoten des eigenen Kommunikationsnetzes KN2 ist ein Speicherplatz vorgesehen. In diesen Speicherplatz werden die von diesem Netzknoten aufgenommenen Wirk-Entgelt Signalisierungen eingetragen sowie vermerkt, an welchen Netzknoten diese Wirk-Entgelt Signalisierungen abgegeben wurden.

Erbringt der Netzknoten N3 einen Dienst und gibt Wirk-Entgelt Signalisierungen hierfür ab, so speichert er zusätzlich ab, warum er diese Wirk-Entgelt Signalisierungen abgegeben hat. Er speichert so beispielsweise ab, daß er Wirk-Entgelt Signalisierungen für die Inanspruchnahme eines Dienst XY signalisiert hat.

Es ist weiter vorteilhaft, auch die Aufnahme und Abgabe von Blind-Entgelt Signalisierungen auf dieselbe Weise zu dokumentieren.

Auf die Steuereinheiten CHA, DOC und REC kann zur Durchführung des erfindungsgemäßen Verfahrens natürlich auch verzichtet werden, sie stellen lediglich vorteilhafte Ausgestaltungen dar.

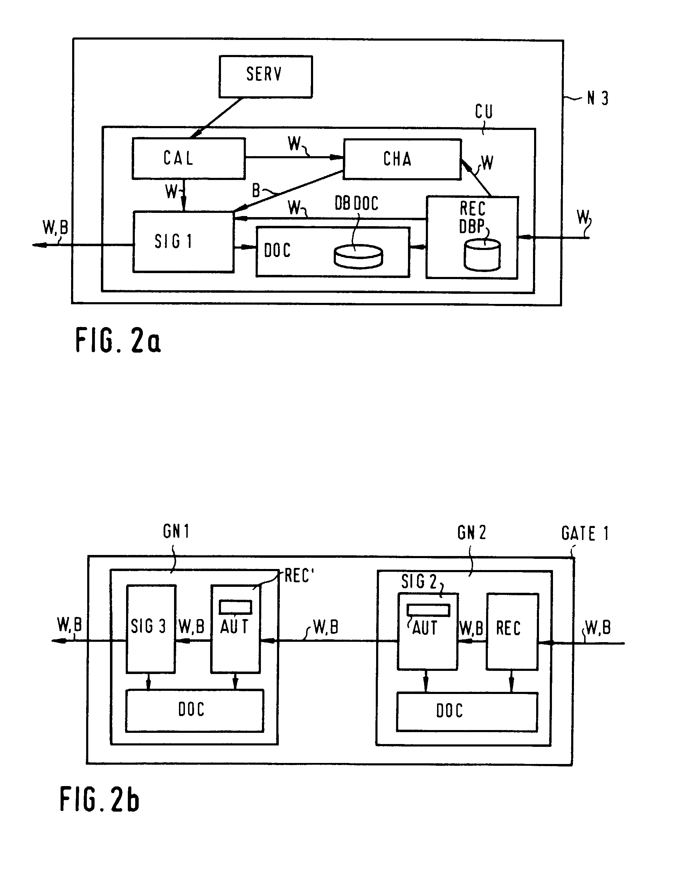

Anhand von Fig. 2b wird nun der Aufbau eines Netzübergangs beispielhaft anhand des Aufbaus des Netzübergangs GATE1 erläutert.

Fig. 2b zeigt den Netzübergang GATE1 mit den Netzübergangsknoten GN1 und GN2, die Steuereinheiten SIG3, DOC, und REC' bzw. SIG2, DOC und REC aufweisen. Die Steuereinheiten SIG3, REC, SIG2 und REC' empfangen und senden Wirk-Entgelt W und Blind-Entgelt B.

Für den Netzübergang GATE1 gilt, daß die von der einen Seite des Netzübergangs aufgenommenen Wirk-Entgelt Signalisierungen genauso groß wie die auf der anderen Seite abgegebene Wirk-Entgelt Signalisierungen sein müssen.

Die Steuereinheit REC enthält dieselben Funktionsgruppen wie die Steuereinheit REC nach Fig. 2a. Die Steuereinheiten REC nimmt von Netzknoten des Kommunikationsnetzes KN2 solches Wirk-Entgelte W und Blind-Entgelte B auf, die die Erbringung von Diensten für die Verbindung betreffen.

Die Steuereinheit SIG2 übernimmt das an die Steuereinheit REC von Netzknoten des Kommunikationsnetzes KN2 signalisierte Wirk-Entgelt W und Blind-Entgelt B und führt dessen weitere Entgelt-Signalisierung in Richtung des Anschlußnetzes des die Verbindung veranlassenden Teilnehmers A zur Vergebührung der Entgelte in diesem Kommunikationsnetz durch. Hierfür signalisiert die Steuereinheit SIG2 die übernommenen Wirk-Entgelte W und Blind-Entgelte B an einen Netzübergangsknoten eines in Bezug auf die Verbindung in Richtung des Anschlußnetzes vorausgehenden Kommunikationsnetzes (KN2), der zusammen mit ihm einen Netzübergang in Richtung des Anschlußnetzes bildet. Mit der Abgabe durch die Steuereinheit SIG2 werden die Wirk-Entgelte forderungsmäßig vom Netzbetreiber OP2 abgegeben, er erhält die abgegebenen Wirk-Entgelte vom Netzbetreiber OP1 bezahlt.

Die Steuereinheit REC' enthält dieselben Funktionsgruppen wie die Steuereinheit REC nach Fig. 2a. Die Steuereinheiten REC nimmt von einem oder von mehreren Netzübergangsknoten eines in Bezug auf eine Verbindung nachfolgenden Kommunikationsnetzes, der oder die zusammen mit ihm einen Netzübergang in Richtung des Anschlußnetzes des die Verbindung veranlassenden Teilnehmers A bilden, Wirk-Entgelt W und Blind-Entgelt B für die Verbindung auf. Mit der Aufnahme durch die Steuereinheit REC' werden die Wirk-Entgelte forderungsmäßig vom Netzbetreiber OP1 übernommen und anerkannt.

Die Steuereinheiten SIG2 und REC' weisen zusätzlich zu den oben beschriebenen Funktionsgruppen jeweils ein Funktionseinheit AUT auf, die folgende weitere Funktion ermöglicht:

In dem Netzübergang GATE1 findet während des Aufbaus der Verbindung eine Verständigung über die gegenseitige Übernahme von Wirk-Entgelt Signalisierungen statt, die von den Funktionseinheiten AUT gesteuert wird. Diese Verständigung entspricht einem Vertragsabschluß zwischen den jeweiligen Netzbetreibern OP1 und OP2 über die Übernahme der für die Verbindungskonfiguration im verbindungsmäßig nachfolgenden Kommunikationsnetz KN2 sowie dem diesen nachfolgenden Kommunikationsnetze KN3 und KN4 anfallenden Entgelte für von der Verbindung in Anspruch genommene Dienste. Für diese Verständigung werden hierbei die Wirk-Entgelt Signalisierungen durch eine codierte Nachricht, deren Entstehung nur das die codierte Nachricht absendende Kommunikationsnetz nachvollziehen kann, gegenseitig bestätigt.

Die Steuereinheit SIG3 übernimmt das an die Steuereinheit REC von Netzknoten des Kommunikationsnetzes KN2 signalisierte Wirk-Entgelt W und Blind-Entgelt B und führt dessen weitere Entgelt-Signalisierung in Richtung des Anschlußnetzes des die Verbindung veranlassenden Teilnehmers A durch. Die Steuereinheit SIG3 signalisiert hierzu die übernommenen Wirk-Entgelte W an den Zugangsknoten AN des Teilnehmers A, wenn das Kommunikationsnetz, dem der Netzübergangsknoten G1 angehört, das Anschlußnetz des Teilnehmers A und damit das Kommunikationsnetz des Zugangsknotens AN ist. Ist dies nicht der Fall, so signalisiert sie die übernommenen Wirk-Entgelte W an einen in Bezug auf die Verbindung vorangehenden Netzübergangsknoten des Kommunikationsnetzes des Netzübergangsknoten G1. Dieser vorangehende Netzknoten bildet hierbei zusammen mit einem Netzübergangsknoten eines vorangehenden Kommunikationsnetzes des Kommunikationssystems einen weiteren Netzübergang in Richtung des Anschlußnetzes des Teilnehmers A. Die Blind-Entgelte B werden auf dieselbe Weise weitersignalisiert.

Es ist auch möglich, daß Wirk-Entgelte und Blind-Entgelte von der Steureinheit SIG3 an unterschiedliche Netzknoten signalisiert werden.

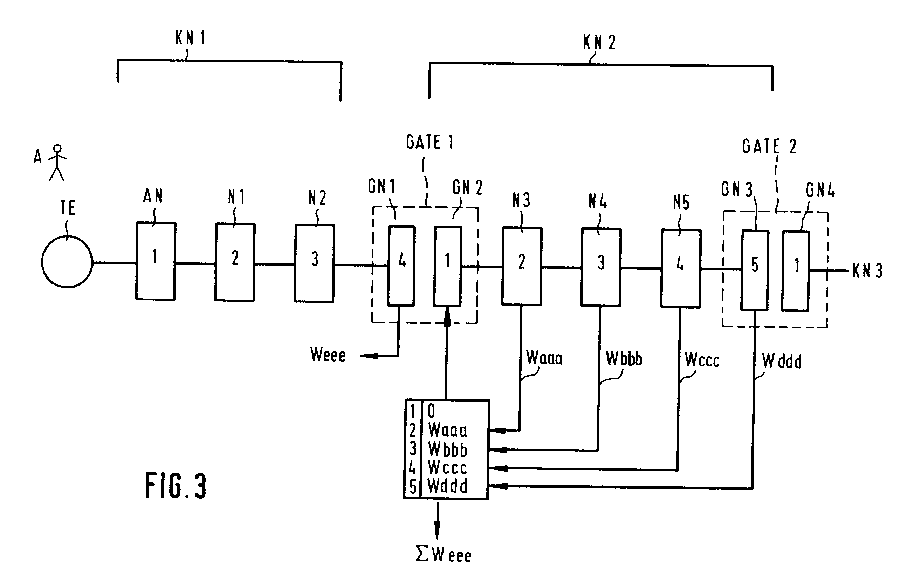

Anhand von Fig. 3 wird nun die Vergebührung der von der Verbindung in Anspruch genommenen Diensten anhand eines ersten Ausführungsbeispiels erläutert.

Fig. 3 zeigt die an der Verbindungskonfiguration beteiligten Netzknoten der Kommunikationsnetze KN1 und KN2, nämlich die Netzknoten AN, N1 bis N5 und GN1 bis GN4 sowie das dem Teilnehmer A zugeordnete Endgerät TE. Jedem der Netzknoten ist innerhalb seines Kommunikationsnetzes eine eindeutige Kennung zugewiesen, mittels der er sich gegenüber den anderen Knoten bei der Entgelt-Signalisierung identifiziert. Den Netznoten AN, N1, N2 und GN1 des Kommunikationsnetzes KN1 ist so eine Kennung 1, 2, 3, bzw. 4 zugewiesen. Den Netznoten GN2 , N3, N4, N5 und GN3 des Kommunikationsnetzes KN1 ist eine Kennung 1, 2, 3, 4, bzw. 5 zugewiesen.

Die Verbindung wird durch die Kommunikationsnezte KN1 und KN2 in folgender Reihenfolge aufgebaut: Vom Endgeräte TE zum Netzzugangsknoten AN und sodann über die Netzknoten N1, N2, GN1, GN2, N3, N4, N5, GN3 zum Netzknoten GN4.

Die Netzknoten N3, N4 und N5 des Kommunikationsnetzes KN2 erbringen Dienste für die Verbindung und ermitteln jeweils eine dem erbrachten Dienst zugeordnete Entgelt Waaa, Wbbb bzw. Wccc. Die ermittelten Entgelte Waaa, Wbbb und Wccc werden jeweils durch das Kommunikationsnetz KN2 zum Netzübergangsknoten GN2 signalisiert, der in Bezug auf die Verbindungskonfiguration den in Vorwärtsrichtung ersten Netzknoten der Verbindungskonfiguration im Kommunikationsnetz KN1 darstellt. Weiter signalisiert der Netzübergangsknoten GN3 ein Entgelt Wddd an den Netzübergangsknoten GN2. Das Entgelt Wddd stellt die in den Kommunikationsnetzen KN3 und KN4 angefallenen Dienst-Gebühren für die Verbindung dar. Die Signalisierung des Entgeltes Wddd entfällt, wenn die Verbindungskonfiguration nur Netzknoten der Kommunikationsnetze KN1 und KN2 umfaßt.

Diese Signalisierung erfolgt über das Nr. 7 Signalisierungssystem. Sie kann aber auch über einen im Rahmen des Aufbaus der Verbindungskonfiguration aufgebauten Rückkanal erfolgen.

Der Netzübergangsknoten GN2 übernimmt die von den Netzknoten N3 bis N5 und dem Netzübergangsknoten GN3 abgegebenen und an ihn geleiteten Wirk-Entgelt Signalisierungen und damit die Entgelte Waaa, Wbbb, Wccc und Wddd. Die abgegebenen bzw. die aufgenommenen Entgelte Waaa, Wbbb, Wccc und Wddd werden sowohl in den Netzknoten N3, N4, N5 und GN3 als auch in dem Netzknoten GN2 zusammen mit der Kennung des aufnehmenden bzw. abgebenden Netzknotens gespeichert. Die an ihn signalisierten Entgelte Waaa, Wbbb, Wccc und Wddd werden im Netzknoten GN2 addiert und eine der Summe entsprechendes Entgelt Weee wird mittels einer Wirk-Entgelt Signalisierungen an den Netzknoten GN1 signalisiert, der dann die weitere Signalisierung zum Zugangsknoten AN durchführt.

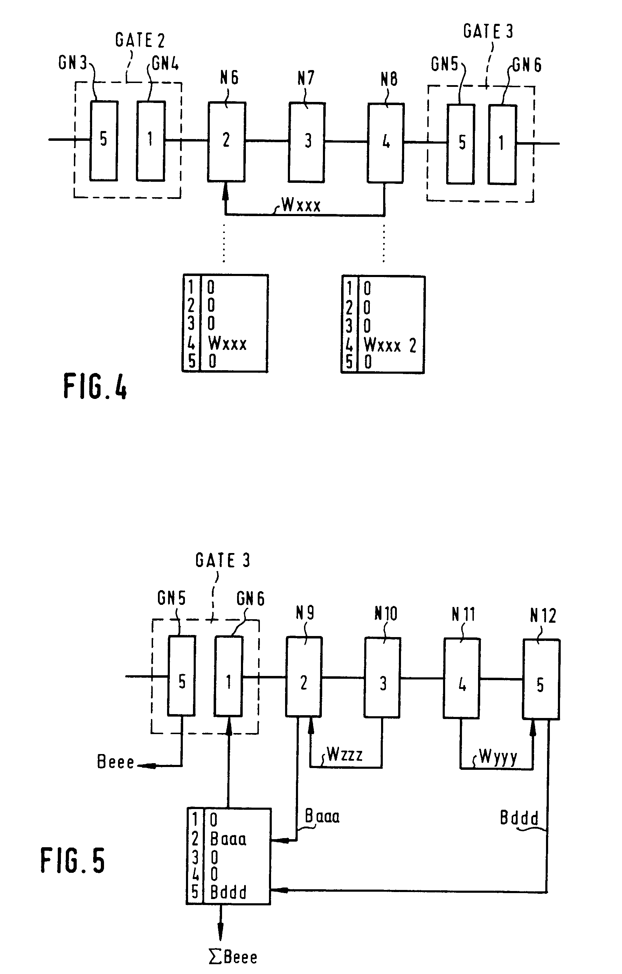

Anhand von Fig. 4 wird nun die Vergebührung der von der Verbindung in Anspruch genommenen Diensten anhand eines zweiten Ausführungsbeispiels erläutert.

Fig. 4 zeigt die an der Verbindungskonfiguration beteiligten Netzknoten des Kommunikationsnetzes KN3, nämlich die Netzknoten N6 bis N8 und GN3 bis GN6. Jedem der Netzknoten GN4 , N6, N7, N8 und GN5 des Kommunikationsnetzes KN3 ist innerhalb des Kommunikationsnetzes KN3 eine eindeutige Kennung zugewiesen, nämlich eine Kennung 1, 2, 3, 4, bzw. 5.

Der Netzknoten N6 nimmt Wirk-Entgelt Wxxx auf, welches vom Netzknoten N8 abgegeben wird. Der Netzknoten N6 bezahlt also die vom Netzknoten N8 geforderten Entgelte. In den Netzknoten N6 wird gespeichert, daß das Wirk-Entgelt Wxxx von dem Netzknoten mit der Kennung 4 aufgenommen wurde. In den Netzknoten N8 wird gespeichert, daß das Wirk-Entgelt Wxxx, das von dem Netzknoten mit der Kennung 4 aufgenommen wurde, also im Netzknoten N8 selbst entstanden ist, an den Netzknoten mit der Kennung 2 abgegeben wurde. Die von den anderen Netzknoten des Kommunikationsnetzes KN3 abgegebenen Wirk-Entgelt Signalisierungen werden von den Netzknoten N6 und N8 nicht aufgenommen, die entsprechenden Speicherplätze sind daher mit "0" belegt.

Anhand von Fig. 5 wird nun die Vergebührung von von der Verbindung in Anspruch genommenen Diensten anhand eines dritten Ausführungsbeispiels erläutert.

Fig. 5 zeigt die an der Verbindungskonfiguration beteiligten Netzknoten des Kommunikationsnetzes KN4, nämlich die Netzknoten N9 bis N12 und GN5 und GN6. Jedem der Netzknoten GN6 , N9, N10, N11 und N12 des Kommunikationsnetzes KN3 ist innerhalb des Kommunikationsnetzes KN3 eine eindeutige Kennung zugewiesen, nämlich eine Kennung 1, 2, 3, 4, bzw. 5, zugeordnet.

Der Netzknoten N12 nimmt ein Wirk-Entgelt Wyyy auf, welches vom Netzknoten N11 abgegeben wird. Ein Blind-Entgelt Bddd wird vom Dienstleister des Netzknotens N12 vorgegeben und vom Netzknoten N12 an den Netzknoten GN6 signalisiert. Der Netzknoten N9 nimmt ein Wirk-Entgelt Wzzz auf, welches vom Netzknoten N10 abgegeben wird. Ein Blind-Entgelt Baaa wird vom Dienstleister des Netzknotens N9 vorgegeben und vom Netzknoten N9 an den Netzknoten GN6 signalisiert. Alle vom Netzübergangsknoten GN6 aufgenommenen Blind-Entgelt Signalisierungen werden zu einem Blind-Entgelt Beee addiert und das Blind-Entgelt Beee an den entsprechenden Netzübergangsknoten GN5 des vorangehenden Kommunikationsnetzes KN3 signalisiert, der das Blind-Entgelt Beee sodann weiter in Richtung des Teilnehmers A signalisiert. Die aufgenommenen und abgegebenen Blind- und Wirk-Entgelte werden in den jeweiligen Netzknoten gespeichert.

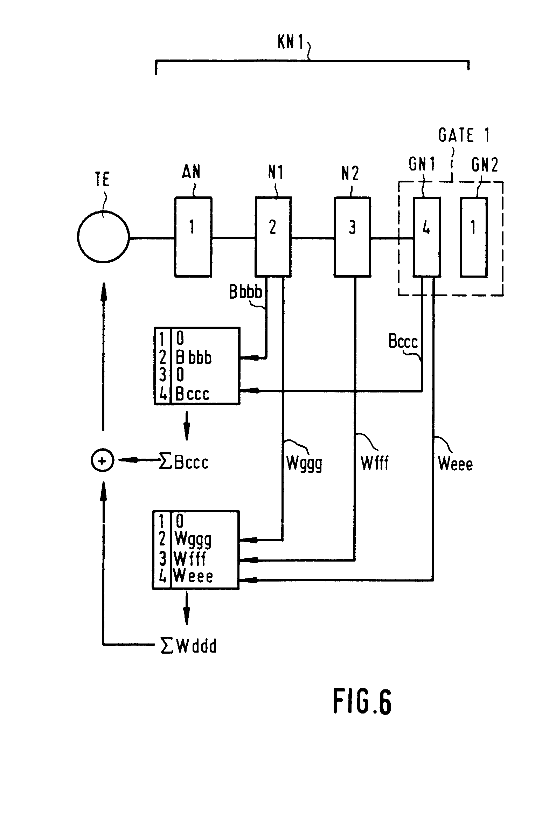

Anhand von Fig. 6 wird nun die Vergebührung von von der Verbindungskonfiguration in Anspruch genommenen Diensten anhand eines vierten Ausführungsbeispiels erläutert.

Fig. 6 zeigt die an der Verbindungskonfiguration beteiligten Netzknoten des Kommunikationsnetzes KN1, nämlich die Netzknoten AN, N1, N2, GN1 und GN2 sowie das Endgerät TE . Jedem der Netzknoten AN, N1, N2 und GN1 des Kommunikationsnetzes KN1 ist innerhalb des Kommunikationsnetzes KN1 eine eindeutige Kennung zugewiesen, nämlich eine Kennung 1, 2, 3, bzw. 4.

Der Zugangsknoten AN nimmt Wirk-Entgelt Signalisierungen Wggg, Wfff und Weee von den Netzknoten N1, N2 und GN1 auf. Diese Wirk-Entgelte werden zu einem Wirk-Entgelt Wddd addiert. Der Zugangsknoten AN nimmt weiter Blind-Entgelt Signalisierungen Bbbb und Bccc von den Netzknoten N1 und GN1 auf. Diese Blind-Entgelte werden zu einem Blind-Entgelt Weee addiert. Der Zugangsknoten AN addiert nun alle von ihm aufgenommene Wirk- und Blind-Entgelt Signalisierungen und signalisiert diese Summe an das Endgerät TE, wo sie dem Teilnehmer A angezeigt werden. Die Anzeige kann entweder als insgesamt bereits vom Teilnehmer zu zahlendes Entgelt oder als aktuell zu entrichtende Entgeltrate erfolgen.

Auf dies Anzeige der Gebühren kann natürlich auch verzichtet werden.

Im weiteren Steuert der Zugangsknoten AN die Abrechnung der empfangenen Wirk-Entgelte Wddd, indem er eine Nachricht an die Vergebührungszentrale des Netzbetreibers OP1 sendet, die eine dem Wirk-Entgelte Wddd entsprechende Gebührenforderung des Netzbetreibers OP1 gegen den Teilnehmer A anzeigt. Die Übertragung dieser Informationen an die Vergebührungszentrale kann natürlich auch bei einer Gebührennachbearbeitung erfolgen.

Es ist auch möglich, daß die Wirk-Entgelte Wggg, Wfff und Weee im Kommunikationsnetz KN1 direkt an die Gebührenzentrale des Netzbetreibers OP1 gesendet werden.

Weiter ist es möglich, daß die Netzübergangsknoten GN1 bis GN6 die Aufnahme und Abgabe von Wirk-Entgelt-Signalisierungen jeweils zusätzlich online der Vergebührungszentrale ihres jeweiligen Netzbetreibers OP1, OP2, OP3 bzw. OP4 melden. Damit kann die Abrechnung zwischen den Netzbetreibern OP1, OP2, OP3 und OP4 weiter beschleunigt werden.

## Patentansprüche

1. Verfahren zur Vergebührung von Diensten in einem aus zwei oder mehr Kommunikationsnetzen (KN1 bis KN4) verschiedener Netzbetreiber (OP1 bis OP4) bestehenden Kommunikationssystem (KS) , wobei bei dem Verfahren für eine Verbindung, deren Aufbau von einem Teilnehmer (A) eines ersten Kommunikationsnetzes (KN1) des Kommunikationssystems veranlaßt ist, ein oder mehrere Dienste von Netzknoten (N3 bis N5; N6 bis N8; N9 bis N12) eines zweiten Kommunikationsnetzes (KN2; KN3; KN4) des Kommunikationssystems (KS) erbracht werden,
**dadurch gekennzeichnet,** daß die Netzknoten (N3 bis N5; N6 bis N8; N9 bis N12) des zweiten Kommunikationsnetzes (KN2; KN3; KN4), die Dienste für die Verbindung erbringen, jeweils eine dem erbrachten Dienst zugeordnetes Entgelt (Waaa bis Wzzz, Baaa bis Beee) ermitteln, und daß Entgelte (Waaa bis Wccc) zur Vergebührung von Netzknoten des zweiten Kommunikationsnetzes an einen ersten Netzübergangsknoten (GN2) des zweiten Kommunikationsnetzes signalisiert werden, der der Verbindung in Richtung des ersten Kommunikationsnetzes (KN1) zugeordnet ist und der eine weitere Entgelt-Signalisierung (Weee) der an ihn signalisierten Entgelte in Richtung des erste Kommunikationsnetzes (KN1) durchführt.

2. Verfahren nach Anspruch 1, dadurch gekennzeichnet, daß ein zweiter Netzübergangsknoten (GN3) des zweiten Kommunikationsnetzes (KN2), der der Verbindung in Richtung eines benachbarten dritten Kommunikationsneztes (KN3) des Kommunikationssystems (KS) zugeordnet ist, Entgelte (Wddd) an den ersten Netzübergangsknoten (GN2) signalisiert, die für die Verbindung in dem dritten Kommunikationsnetz (KN3) und/ oder in mindestens einem nachfolgenden weiteren Kommunikationsnetz (KN4) des Kommunikationssystems (KS) erbrachten Dienste angefallen sind, und daß der erste Netzübergangsknoten (GN2) eine weitere Entgelt-Signalisierung (Weee) dieser im dritten Netzen (KN2, KN3) und/ oder in dem mindestens einen weiteren Kommunikationsnetz (KN4) angefallenen Entgelte in Richtung des erste Kommunikationsnetzes (KN1) durchführt.

3. Verfahren nach Anspruch 1, dadurch gekennzeichnet, daß der erste Netzübergangsknoten (GN2) für die Durchführung der weiteren Entgelt-Signalisierung die aufgenommenen Entgelte (Weee) an einen dritten Netzübergangsknoten (GN1) des in Bezug auf die Verbindung vorangehenden Kommunikationsnetzes (KN1) signalisiert, wobei der erste und der dritte Netzübergangsknoten zusammen einen Netzübergang (GATE1) in Richtung des ersten Kommunikationsnetzes (KN1) bilden und daß der dritte Netzübergangsknoten (GN1) dieses Entgelt an den Zugangsknoten (AN) des Teilnehmers signalisiert, wenn das vorangehende Kommunikationsnetz (KN1) das erste Kommunikationsnetz (KN1) ist, und ansonsten dieses Entgelt an einen in Bezug auf die Verbindung vorangehenden vierten Netzübergangsknoten signalisiert.

4. Verfahren nach Anspruch 1, dadurch gekennzeichnet, daß zwischen dem ersten Netzübergangsknoten (GN2) und dem dritten Netzübergangsknoten (GN1) eine Authorisierungs-Signalisierung durchgeführt wird, mittels der eine Übernahme der vom ersten Netzübergangsknoten signalisierten Entgelte durch den Netzbetreiber des vorangehenden Kommunikationsnetzes vereinbart wird.

5. Verfahren nach Anspruch 1, dadurch gekennzeichnet, daß der erste Netzübergangsknoten (GN2) die an ihn signalisierten Entgelte (Waaa bis Wddd) summiert und als Summenentgelt (Weee) in Richtung des erste Kommunikationsnetzes (KN1) weitersignalisiert.

6. Verfahren nach Anspruch 1, dadurch gekennzeichnet, daß noch nicht abgerechnete Forderungen als Wirk-Entgelt (Waaa bis Wzzz) und bereits abgerechnete Forderungen als Blind-Entgelt (Baaa bis Beee) signalisiert werden.

7. Verfahren nach Anspruch 1, dadurch gekennzeichnet, daß Netzknoten Entgelt-Profile zugeordnet sind und gemäß des jeweiligen Entgelt-Profils eine Entgelt-Signalisierung von einem Netzknoten angenommen oder abgewiesen wird.

8. Verfahren nach Anspruch 1, dadurch gekennzeichnet, daß die an einen Netzknoten (AN, N1 bis N12, GN1 bis GN6) signalisierten Entgelte (Waaa bis Wzzz, Baaa bis Beee) in diesem zu Nachweiszwecken gespeichert werden.

9. Verfahren nach Anspruch 1, dadurch gekennzeichnet, daß die in das erste Kommunikationsnetz (KN1) signalisierten Entgelte (Waaa bis Wzzz, Baaa bis Beee) an den Zugangsknoten (AN) des Teilnehmers (a) geleitet werden.

10. Verfahren nach Anspruch 9, dadurch gekennzeichnet, daß der Zugangsknoten (AN) die an ihn signalisierten Entgelte (Waaa bis Wzzz, Baaa bis Beee) dem Teilnehmer (A) anzeigt.

11. Verfahren nach Anspruch 1, dadurch gekennzeichnet, daß die in das erste Kommunikationsnetz signalisierten Entgelte direkt an eine Vergebührungszentrale des ersten Netzbetreibers geleitet werden.

12. Netzknoten (N3) zum Anschluß an ein zweites Kommunikationsnetz (KN2) in einem Kommunikationssystem (KS), das aus zwei oder mehr Kommunikationsnetzen (KN1 bis KN4) verschiedener Netzbetreiber (OP1 bis OP4) besteht,
**dadurch gekennzeichnet,** daß der Netzknoten (N3) mit einer ersten Steuereinheit (CAL) versehen ist, die so ausgestaltet ist, daß sie, wenn der Netzknoten (N3) für eine Verbindung, die von einem Teilnehmer (A) eines ersten Kommunikationsnetzes (KN1) des Kommunikationssystems (KS) veranlaßt ist, einen Dienste erbringen, eine dem erbrachten Dienst zugeordnetes Entgelt (W) ermittelt, und daß der Netzknoten (N3) mit einer zweiten Steuereinheit (SIG1) versehen ist, die so ausgestaltet ist, daß sie Entgelte (W) zur Vergebührung an einen Netzübergangsknoten (GN2) des zweiten Kommunikationsnetzes (KN2) signalisiert, der der Verbindung in Richtung des ersten Kommunikationsnetzes (KN1) zugeordnet ist und der eine weitere Entgelt-Signalisierung (Weee) der an ihn signalisierten Entgelte in Richtung des erste Kommunikationsnetzes (KN1) durchführt.

13. Netzübergangsknoten (GN2) zum Anschluß an ein zweites Kommunikationsnetz (KN2) in einem Kommunikationssystem (KS), das aus zwei oder mehr Kommunikationsnetzen (KN1 bis KN4) verschiedener Netzbetreiber (OP1 bis OP4) besteht,
**dadurch gekennzeichnet,** daß der Netzübergangsknoten (GN2) mit einer ersten Steuereinheit (REC) versehen ist, die so ausgestaltet ist, daß sie von Netzknoten (N3, N4, N5, GN3) des zweiten Kommunikationsnetzes (KN2) Entgelt-Signalisierungen (Waaa bis Wddd) aufnimmt, die die Erbringung von Diensten für eine Verbindung betreffen, die von einem Teilnehmer (A) eines ersten Kommunikationsnetzes (KN1) des Kommunikationssystems (KS) veranlaßt ist, und daß der Netzübergangsknoten (GN2) mit einer zweiten Steuereinheit (SIG2) versehen ist, die so ausgestaltet ist, daß sie eine weitere Entgelt-Signalisierung (Weee) der von dem Netzübergangsknoten aufgenommenen Entgelt-Signalisierungen (Waaa bis Wddd) in Richtung des ersten Kommunikationsnetzes (KN1) durchführt.

14. Netzübergangsknoten (GN1) zum Anschluß an ein zweites Kommunikationsnetz (KN1) in einem Kommunikationssystem (KS), das aus zwei oder mehr Kommunikationsnetzen (KN1 bis KN4) verschiedener Netzbetreiber (OP1 bis OP4) besteht,
**dadurch gekennzeichnet**, daß der Netzübergangsknoten (GN1) mit einer ersten Steuereinheit (REC') versehen ist, die so ausgestaltet ist, daß sie von einem Netzübergangsknoten (GN2) eines in Bezug auf eine Verbindung nachfolgenden dritten Kommunikationsnetzes (KN2), der zusammen mit ihm einen Netzübergang (GATE1) in Richtung eines ersten Kommunikationsnetzes (KN1) des Kommunikationssystems (KS) bildet, Entgelt-Signalisierungen (Weee) aufnimmt, die die Erbringung von Diensten für die Verbindung betreffen, wobei die Verbindung von einem Teilnehmer (A) des ersten Kommunikationsnetzes (KN1) veranlaßt ist, und daß der Netzübergangsknoten (GN2) mit einer zweiten Steuereinheit (SIG3) versehen ist, die so ausgestaltet ist, daß sie die aufgenommenen Entgelt-Signalisierungen (Weee) an einen Zugangsknoten (AN) des Teilnehmers (A) signalisiert, wenn das zweite Kommunikationsnetz (KN1) das erste Kommunikationsnetz (KN1) ist, und ansonsten die aufgenommenen Entgelt-Signalisierungen an einen in Bezug auf die Verbindung vorangehenden Netzübergangsknoten des zweiten Kommunikationsnetzes signalisiert, der zusammen mit einem Netzübergangsknoten eines vierten Kommunikationsnetzes des Kommunikationssystems einen Netzübergang in Richtung des ersten Kommunikationsnetzes bildet.
